# EUROPÄISCHE PATENTSCHRIFT

(11) **EP 1 071 590 B1**
(45) Veröffentlichungstag und Bekanntmachung des Hinweises auf die Patenterteilung: **13.04.2005**
(21) Anmeldenummer: 99962030.5
(22) Anmeldetag: 23.10.1999
(51) Int. Cl.: B60S 1/40, B60S 1/38

(54) **VORRICHTUNG ZUM GELENKIGEN VERBINDEN EINES WISCHBLATTS FÜR SCHEIBEN VON KRAFTFAHRZEUGEN MIT EINEM WISCHERARM**
DEVICE FOR HINGEABLY JOINING A MOTOR VEHICLE WINDOW-PANE WIPER BLADE TO A WIPER ARM
DISPOSITIF DE LIAISON ARTICULEE ENTRE UNE RACLETTE D'ESSUIE-GLACE DE VEHICULE A MOTEUR ET UN BRAS D'ESSUIE-GLACE

(30) Priorität: 15.02.1999 DE 19906288
(43) Veröffentlichungstag der Anmeldung: 31.01.2001
(73) Patentinhaber: ROBERT BOSCH GMBH, 70442 Stuttgart (DE)
(72) Erfinder: DE BLOCK, Peter, B-3545 Halen (BE)
(86) Internationale Anmeldenummer: PCT/DE1999/003401
(87) Internationale Veröffentlichungsnummer: WO 2000/048877

(56) Entgegenhaltungen:
- DE-A- 2 313 689
- DE-A- 19 627 115
- DE-A- 19 729 864
- DE-A- 19 816 409

## Beschreibung

### Stand der Technik

Die Erfindung geht aus von einer Vorrichtung zum gelenkigen Verbinden eines Wischblatts mit einem Wischerarm nach der Gattung des Anspruchs 1. Bei einer bekannten Vorrichtung dieser Art (DE 24 58 29 2 A) - die auch offenkundig vorbenutzt wird - ragt der Gelenkbolzen seitlich aus dem Wischerarm heraus. Das wischblattseitige Gelenkbolzenlager ist eine Steckaufnahme für den Gelenkbolzen, in welche dieser eingeführt wird. Zur Sicherung der Betriebsstellung zwischen Wischblatt und Wischerarm ist der Gelenkbolzen mit einer an dessen Mantelfläche angeordneten, umlaufenden Rastnut versehen, in welche eine Rastfeder des Wischblatts einrastet. Weitere Hinweise zur Anordnung und Ausgestaltung der Verbindungsvorrichtung fehlen. Bei der offenkundig vorbenutzten Vorrichtung ist das Gelenkbolzenlager durch eine Querbohrung im Hauptbügel eines die Wischleiste fassenden, mehrgliedrigen und deshalb hoch bauenden Tragbügelgestells gebildet. Eine derartige Anordnung aber ist nicht möglich, wenn die Wischleiste von einem Tragelement gehalten werden soll, wie es beispielsweise aus der DE 196 27 115 A1 bekannt ist und welches zu einer niedrigen Bauhöhe des Wischblatts entscheidend beiträgt.

Die gattungsbildende DE-OS 23 13 689 beschreibt eine Vorrichtung zum gelenkigen Verbinden eines Wischblatts mit einem Wischarm wobei die Gelenkachse Teil des Wischerarms ist. Das Wischblatt ist ein sogenanntes gelenkfreies Wischblatt, bei dem die kraftübertragende Funktion nicht von einem Tragbügelgestell sondern von einem Tragelement übernommen wird, das lediglich aus vorgebogenen Federschienen besteht. Eine Wischleiste ist an einer unteren Seite des Tragelements und ein Kupplungselement an einer oberen Seite des Tragelement angeordnet. Das Kupplungselement weist ein Gelenkbolzenlager auf, in dem der Gelenkbolzen des Wischerarms gelagert und befestigt werden kann. Das Kupplungselement wird über Klammern gehalten, die sich zum einen am Tragelement und zum anderen an einem oberen Teil der Wischleiste abstützen. Um einen sicheren Halt zu gewährleisten ist es notwendig, dass diese Klammern einen Druck sowohl auf das Tragelement als auch die Wischleiste ausüben. Oberhalb der Wischleiste gehen die Klammern in einen Bügel über, an dem zum einen das Gelenkbolzenlager und zum anderen eine Führung für Sicherungsmittel für den Gelenkbolzen angeformt ist. Die Sicherungsmittel sind in der Form einer Stahlbügelfeder ausgebildet und müssen spielfrei in der Führung beweglich sein.

Diese Forderungen, gemäß denen zum einen die Klammern auf das Tragelement sowie die Wischleiste einen Druck ausüben zum anderen der sich daran anschließende aus dem gleichen Blech geformte Führungsbereich einen Gelenkbolzen und dessen Sicherungsmittel ordnungsgemäß aufnehmen müssen, sind insbesondere über einen längeren Betriebszeitraum mit unterschiedlichen Witterungsbedingungen kaum zu erfüllen.

### Vorteile der Erfindung

Bei der erfindungsgemäßen Verbindungsvorrichtung mit den kennzeichnenden Merkmalen des Anspruchs 1 ist es möglich die Vorteile der durch das bandartige Tragelement ermöglichten niedrigen Bauhöhe des Wischblatts auch dann zu nutzen, wenn der Gelenkbolzen der Verbindungsvorrichtung am Wischerarm angeordnet ist. Die Randstreifen des Tragelements ermöglichen eine betriebssichere Befestigung des Kupplungselements an der von der Scheibe abgewandten oberen Bandfläche des Tragelements.

Eine einfache Montage des am Wischerarm angeordneten Gelenkbolzens in seinem wischblattseitigen Gelenkbolzenlager ergibt sich, wenn das Kupplungselement in einer wenigstens annähernd zur Scheibe parallel angeordneten Ebene getrennt ist, wenn die Trennebene das Gelenkbolzenlager schneidet und wenn weiter die beiden Kupplungselementhälften miteinander lösbar verbunden sind.

Um eine einfache, dauerhafte Verbindung zwischen Wischleiste und Tragelement zu erreichen, gehören in Weiterbildung des Erfindungsgedankens zu dem Tragelement zwei Tragschienen, die in Längsnuten der Wischleiste angeordnet sind und zumindest über einen Längsabschnitt mit Randstreifen aus ihren Längsnuten ragen, an welchen die Haltemittel des Kupplungselements angreifen.

Zur weiteren Montagevereinfachung ist das Gelenkbolzenlager, in Längsrichtung des Wischblatts gesehen, am einen Endabschnitt des Kupplungselement angeordnet und die beiden Kupplungselementhälften sind im Bereich des Gelenkbolzenlagers durch ein Filmgelenk einstückig miteinander verbunden. Dadurch sind die beiden sich ergänzenden Kupplungselementhälften schon in einer montagegerechten Lage, so daß nach dem Einbringen des Wischerarm-Gelenkbolzens in die eine Hälfte die andere Hälfte lediglich noch auf die andere Hälfte geklappt werden muß.

Eine einfache und betriebssichere Verbindung des Kupplungselements mit dem Wischblatt wird dadurch erreicht, daß bezogen auf die Lage der Trennebene zur Scheibe die untere Hälfte des Kupplungselements die Längs- Außenkanten der Randstreifen des Tragelements mit die Haltemittel bildenden Sicherungskrallen umgreift.

Wenn weiter an jedem Randstreifen des Tragelements zwei jeweils mit Abstand von einander angeordnete Sicherungskrallen angreifen ergibt sich eine stabile Verbindung zwischen dem Tragelement und dem Kupplungselements die auch der dort auftretenden hohen Dauerbelastung standhält.

Wenn, bezogen auf die Lage der Trennebene zur Scheibe, die obere Hälfte des Kupplungselements mit elastisch auslenkbaren Rasthaken versehen ist, welche die Längs-Außenkanten der Randstreifen queren und mit der unteren Bandfläche des Tragelements rastend zusammenwirken, ist auf einfache Weise die obere Hälfte des Kupplungselements in ihrer Schließstellung gesichert, in welcher der Gelenkbolzen vollständig umschlossen ist.

Damit eine schmale Bauweise des Kupplungselements realisierbar ist sind die Rasthaken der oberen Hälfte zwischen den Sicherungskrallen der unteren Hälfte des Kupplungselements angeordnet. Die Rasthaken müssen also nicht die Sicherungskrallen übergreifen.

In weiterer Ausgestaltung der Erfindung weist der Wischerarm zumindest im Bereich des Gelenkbolzens zwei mit Abstand voneinander und parallel zueinander, zur Scheibe stehend ausgerichtete Wangen auf, an denen jeweils ein Ende des Gelenkbolzens gehalten und der Abstand zwischen den Wangen auf die Breite des Kupplungselements abgestimmt ist. Dadurch ergibt sich eine gute, spielarme Führung des Wischblatts zwischen den Wangen des Wischerarms, was für den gewünschten ruhigen Wischbetrieb eine wichtige Voraussetzung ist.

Wenn das Wischblatt mit einer sich über die obere Bandfläche des Tragelements hinaus erstreckende Windabweisleiste aufweist ist in Weiterbildung des Erfindungsgedankens das Kupplungselements in einer Aussparung in der Windabweisleiste angeordnet und die obere Hälfte des Kupplungselements ist mit einem im Querschnitt dem Querschnitt der Windabweisleiste zumindest angenäherten Fortsatz versehen. Dadurch wird einmal die Windabweisleiste auch im Bereich der Verbindungsvorrichtung optisch fortgeführt und rechtzeitig die von der Windabweisleiste erwartete Wirkung hinsichtlich der Verteilung des Wischblatt-Anpressdrucks bei höheren Fahrtgeschwindigkeiten auch im Mittelbereich des Wischblatts, das heißt im Bereich der Aussparung erhalten. Die Aussparung wirkt sich somit nicht negativ auf die Anpressdruck-Verteilung der Wischleiste an der zu wischenden Scheibe aus.

Zweckmäßig ist zur Realisierung seiner verschiedenen Funktionen das Kupplungselement aus einem elastischen Kunststoff hergestellt.

Weitere vorteilhafte Weiterbildungen und Verausgestaltungen der Erfindung sind in der nachfolgenden Beschreibung eines in der dazugehörigen Zeichnung dargestellten Ausführungsbeispiels angegeben.

### Zeichnung

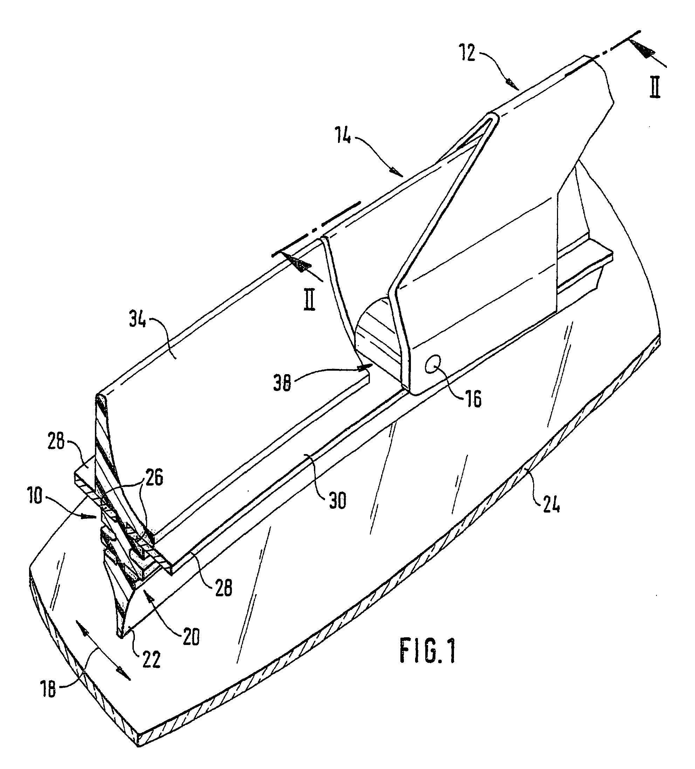

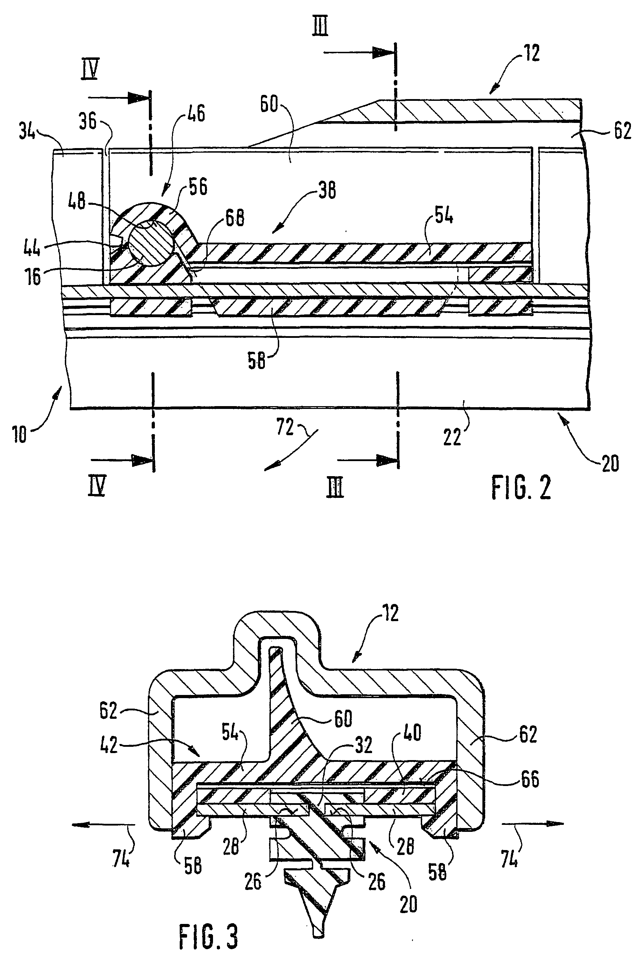

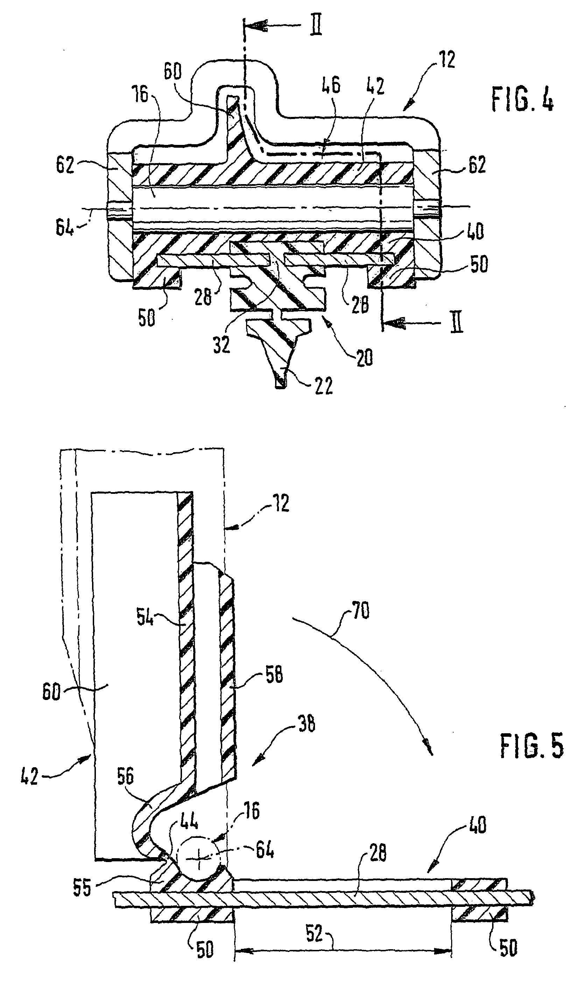

In der Zeichnung zeigen: Figur 1 eine perspektivische Teilansicht eines Wischerarms und eines Wischblatts mit einer Vorrichtung zum gelenkigen Verbinden dieser beiden Bauelemente, Figur 2 einen Längsschnitt entlang der Linie II-II durch die Anordnung gemäß Figur 1 gedreht und vergrößert dargestellt wobei der Schnittverlauf der Linie II-II in Figur 4 folgt, Figur 3 die Schnittfläche eines Schnitts durch die Anordnung gemäß Figur 2, entlang der Linie III-III, Figur 4 die Schnittfläche eines Schnitts durch die Anordnung gemäß Figur 2 entlang der Linie IV-IV und Figur 5 die Anordnung gemäß Figur 2 wobei das Kupplungselement in einer Vormontageposition dargestellt und der zu montierende Wischerarm strichpunktiert gezeichnet sind.

### Beschreibung des Ausführungsbeispiels

Ein in Figur 1 abschnittsweise dargestelltes Wischblatt 10 zum Reinigen von Kraftfahrzeugscheiben ist in seinem Mittelabschnitt gelenkig mit dem freien Ende eines am Kraftfahrzeug geführten, angetriebenen Wischerarms 12 verbunden. Diese Anlenkung geschieht mit Hilfe einer Verbindungsvorrichtung 14, zu der ein am Wischerarm gehaltener Gelenkbolzen 16 gehört. Der Gelenkbolzen 16 erstreckt sich im wesentlichen in Bewegungsrichtung (Doppelpfeil 18 in Figur 1) des langgestreckten Wischblatts 10, welches quer zu seiner Längserstreckung durch den Wischerarm 12 über die Scheibe verschoben wird. Das Wischblatt 10 hat eine langgestreckte, gummielastische Wischleiste 20, die mit einer Wischlippe 22 an der zu wischenden Oberfläche der Kraftfahrzeugscheibe 24 angelegt ist. Die Wischleiste 20 ist an ihren Längsseiten mit randoffenen Längsnuten 26 versehen, in denen jeweils eine aus einem federelastischen Material gefertigte Federschiene 28 untergebracht ist. Die beiden Federschienen 28 befinden sich in einer gemeinsamen Ebene, die mit Abstand vor der zu wischenden Oberfläche der Scheibe 24 liegt. Die beiden Federschienen 28 gehören zu einem Tragelement zum Halten der Wischleiste 20. Sie erstrecken sich über die gesamte Länge der Wischleiste 20 und ragen im Mittelbereich der Wischleiste mit Randstreifen 30 aus ihren Längsnuten 26 heraus. Um die Federschienen 28 quer zu ihrer Längserstreckung in den Längsnuten 26 zu sichern, können die Federschienen von auch dem Tragelement zuzurechnenden Sicherungsklammern gefaßt sein. Die Wischleiste 20 erstreckt sich mit einem Längssteg 32 (Fig. 3 und 4) zwischen den Federschienen 28 hindurch und ist auf der von der Scheibe 24 abgewandten Seite der Federschienen 28 als Windabweisleiste 34 ausgebildet. Wie insbesondere Figur 1 zeigt ist die Windabweisleiste 34 Mittelabschnitt des Wischblatts mit einer Aussparung 36 versehen, die zur Aufnahme eines Kupplungselements 38 dient. Das Kupplungselements 38 dient zum Anschließen des Wischblatts 10 am Wischerarm 12 und gehört somit ebenso wie der Gelenkbolzen 16 des Wischerarms zur Verbindungsvorrichtung 14. Wie insbesondere Figur 5 zeigt, ist das Kupplungselement 38 im wesentlichen zweiteilig aufgebaut. Es hat eine untere Hälfte 40, die fest mit den Federschienen 28 des Tragelements verbunden ist. Weiter hat das Kupplungselement 38 eine obere Hälfte 42, die über ein Filmgelenk 44 mit der unteren Hälfte 40 einstückig verbunden ist. Wie insbesondere die Figuren 2 und 4 zeigen sind die beiden an das Filmgelenk 44 anschließenden Abschnitte der unteren Hälfte 40 und der oberen Hälfte 42 des Kupplungselements 38 als Lagernabe 46 ausgebildet, die mit einer Lagerbohrung 48 versehen ist, welche zur Aufnahme des Gelenkbolzens 16 dient. Die untere Hälfte 40 des Kupplungselements 38 umgreift mit Haltemitteln bildenden Sicherungskrallen 50 die Randstreifen 30 der Federschienen 28. Sie sind einander gegenüberliegend paarweise (Figur 4) und in Längsrichtung des Wischblatts 10 mit Abstand 52 voneinander angeordnet. Die Sicherungskrallen 50 halten einmal das Kupplungselement 38 am Tragelement und sichern darüber hinaus die beiden Federschienen 28 des Tragelements in den Längsnuten 26 der Wischleiste 20. Darüber hinaus kann auch eine Längsarretierung des Kupplungselements 38 am Tragelement durch die einander zugewandten Wände der Aussparung 36 erfolgen, weil die Wischleiste 20 selbst am Tragelement festgelegt ist. Weiter ist die untere Hälfte 40 des Kupplungselements 38 an ihrem das Filmgelenk 44 aufweisenden Ende mit der einen Lagernabenhälfte 55 versehen. Die obere Hälfte 42 des Kupplungselements 38 hat einen plattenartigen Grundkörper 54, an dessen das Filmgelenk 44 aufweisenden Ende die andere Lagernabenhälfte 56 angeordnet ist. Figur 2 zeigt das Kupplungselement 38 in Betriebsstellung, in welcher der Gelenkbolzen 16 in der Lagerbohrung 48 liegt. Wie insbesondere Figur 3 zeigt, untergreifen am Grundkörper 54 der oberen Hälfte 42 angeordnete, elastisch auslenkbare Rasthaken 58 die Randstreifen 30 der Federschienen 28. Die Haltemittel bildenden Rasthaken 58 sind zwischen den Sicherungskrallen 50 der unteren Hälfte 40 des Kupplungselements 38 angeordnet. Sie queren die Ebene der Federschienen 28 in dem durch den Abstand 52 gebildeten Freiraum zwischen den Sicherungskrallen 50 (Figur 5). Weiter ist an der oberen Hälfte 42 des Kupplungselements 38 ein Fortsatz als Fülleiste 60 angeordnet, deren Querschnitt so ausgebildet ist, daß sie den Querschnitt der Windabweisleiste 34 fortführt und somit, hinsichtlich der Windabweisleiste 34 die Aussparung 36 ausfüllt (Figur 2).

Den Figuren 1,3 und 4 ist entnehmbar, daß der Wischerarm 12 im Bereich des Gelenkbolzens 16 zwei mit Abstand voneinander, parallel zueinander, zur Scheibe 24 stehend ausgerichtete Wangen 62 aufweist, an denen jeweils ein Ende des Gelenkbolzens 16 gehalten ist. Der Abstand zwischen den Wangen 62 ist so auf die Breite des Kupplungselements 38 abgestimmt, daß sich eine möglichst spiellose Führung des Wischblatts wischenden Wangen 62 ergibt. Andererseits soll die Abstimmung so getroffen sein, daß eine Relativbewegung zwischen dem Wischerarm 12 und dem Wischblatt 10 um die Gelenkachse 64 (Figur 4) der Verbindungsvorrichtung 14 nicht behindert ist. Aus den Figuren 2, 3 und 5 ist weiter entnehmbar, daß sich zwischen den beiden Hälften 40 und 42 des Kupplungselements 38 eine Trennebene 66 ergibt die im wesentlichen parallel zur zu wischenden Scheibenoberfläche liegt. Die Trennebene 66 schneidet mit einer Abkröpfung 68 das Gelenkbolzenlager 48 etwa diametral gegenüber dem Filmgelenk 44, wodurch sich die beiden Lagernabenhälften 55 und 56 ergeben. Abgesehen von der hinsichtlich der Festigkeit des Kupplungselements 38 belanglosen Filmgelenkverbindung zwischen den beiden Hälften 40 und 42 kann man die beiden Hälften als Einzelteile des Kupplungselements 38 betrachten die mit Hilfe der Randstreifen 30 und der an diesen angreifenden Rasthaken 58 lösbar miteinander verbunden sind. Bezogen auf die Lage der Trennebene 66 zur Scheibe 20 und die Anordnung der beiden Hälften 40 und 42 des Kupplungselements 38 zueinander ist die Bezeichnung der beiden Hälften als obere beziehungsweise als untere Hälfte verständlich.

Die Herstellung der gelenkigen Verbindung zwischen dem Wischblatt 10 und dem Wischerarm 12 soll im folgenden anhand der Figuren 2 und 5 erläutert werden. In Figur 5 sind aus Gründen der Übersichtlichkeit als wischblattseitiges Bauelement lediglich die eine Federschiene 28 und die an dieser gehaltene untere Hälfte 40 des Kupplungselements 38 dargestellt worden. Aus demselben Grund ist der Wischerarm mit seinem Gelenkbolzen 16 strichpunktiert gezeichnet. In einem ersten Montageschritt ist das freie Ende des Wischerarms 12 so über die obere Hälfte 42 des geöffneten Kupplungselements 38 geführt, daß der Gelenkbolzen 16 in die eine Lagernabenhälfte 55 der unteren Hälfte 40 zu liegen kommt (Figur 5). Danach wird der Wischerarm zusammen mit der oberen Hälfte 42 des Kupplungselements in Richtung des Pfeiles 70 geschwenkt, bis die in Figur 2 dargestellte Betriebsposition des Wischerarms beziehungsweise des Kupplungselements 38 erreicht ist, in welcher die beiden Lagernabenhälften 55, 56 zusammengefügt sind, so daß sich das geschlossene Gelenkbolzenlager 48 ergibt. Dabei muß aber beachtet werden, daß vor Erreichen dieser Betriebsposition das Wischblatt 10 in Richtung des Pfeiles 72 (Figur 2) gegenüber dem Wischerarm hochgeschwenkt ist, damit die Rasthaken 58 nicht von den Wangen 62 des Wischerarms 12 an ihren Außenseiten überdeckt sind. Denn nur dann können die Rasthaken 58 der oberen Hälften 42 des aus einem elastischen Kunststoff hergestellten Kupplungselements 38 seitlich auslenken - Pfeile 74 in Figur 3 - die Längs- Außenkanten der Randstreifen 30 queren und mit der unteren, der Scheibe zugewandten Bandfläche des Tragelements beziehungsweise der beiden Randstreifen 30 der Federschienen 28 rastend zusammenwirken. Wenn danach das Wischblatt 10 mit seiner Wischlippe 22 an der Scheibe 24 angelegt ist, tauchen die Rasthaken 50 zwischen die Wangen 62 des Wischerarms 12 ein (Figur 3) und sind so während des Wischbetriebs unlösbar in ihrer Raststellung gesichert. Dies gilt auch für die Sicherung des Wischblatts 10 am im Gelenkbolzenlager 48 geführten Gelenkbolzen 16.

Ein Lösen des Wischblatts 10 vom Wischerarm 12 geschieht in umgekehrter Reihenfolge der eben geschilderten Montageschritte. Es wird zunächst das Wischblatt samt dem Wischerarm von der Scheibe abgehoben. Danach wird das Wischblatt gegenüber dem Wischerarm in Richtung des Pfeiles 72 geschwenkt so daß die Rasthaken aus den Wangen 62 des Wischerarms heraustreten und ausgelenkt werden können. Danach kann die obere Hälfte 42 des Kupplungselements 38 in seine in Figur 5 dargestellte Öffnungsposition gebracht werden, wobei die erforderliche Klappbewegung im Filmgelenk 44 erfolgt. Weil das Filmgelenk 44 keinen Einfluß auf die Stabilität des Kupplungselements 38 und dessen Befestigung am Tragelement 28 hat, sondern in erster Linie zur Vereinfachung der Montage beiträgt, kann trotz der einstückigen Verbindung der beiden Hälften 40 und 42 durch das Filmgelenk 44 von einer lösbaren Verbindung zwischen diesen Teilen gesprochen werden. Das Entnehmen des Gelenkbolzens 16 aus seiner Lagerbohrung 48 mit des Lösen des Wischblatts vom Wischerarm ist somit ohne Schwierigkeiten möglich.

## Patentansprüche

1. Vorrichtung zum gelenkigen Verbinden eines Wischblatts (10) für Scheiben (24) von Kraftfahrzeugen mit einem am Kraftfahrzeug geführten, zwischen Umkehrlagen bewegbaren Wischerarm (12), der an seinem freien Endabschnitt mit einem sich im wesentlichen in Bewegungsrichtung (18) erstreckenden Gelenkbolzen (16) zum Anschließen des mit einer langgestreckten, gummielastischen Wischleiste (20) an der Scheibe (24) anlegbaren Wischblatts versehen ist und das langgestreckte Wischblatt (10) ein federelastisches, bandartiges, langgestrecktes Tragelement umfasst, an dem an einer unteren Seite die Wischleiste (20) und an der von der Scheibe abgewandten oberen Bandfläche des Tragelements ein Kupplungselement (38) mit dem Gelenkbolzenlager (48) angeordnet und über Haltemittel (50) an dem Tragelement gehalten ist, wobei das Kupplungselement Mittel zum Sichern des Wischblatts am im Lager geführten Gelenkbolzen (16) aufweist, **dadurch gekennzeichnet, dass** das Tragelement an seinen beiden Längsseiten mit Randstreifen (30) zumindest abschnittsweise über die Längsseiten der Wischleiste (20) hinausragt und das Kupplungselement (38) über die Haltemittel (50) mit den Randstreifen (30) des Tragelements verbunden ist und dass ferner das Kupplungselement (38) in einer wenigstens annähernd zur Scheibe (24) parallel angeordneten Ebene getrennt ist, dass die Trennebene (66, 68) das Gelenkbolzenlager (48) schneidet und dass die beiden Kupplungselementhälften (40, 42) miteinander lösbar verbunden sind.

2. Vorrichtung nach Anspruch 1, **dadurch gekennzeichnet, daß** zu dem Tragelement zwei Tragschienen (28) gehören, die in Längsnuten (26) der Wischleiste (20) angeordnet sind und zumindest über einen Längsabschnitt mit Randstreifen (30) aus ihren Längsnuten ragen, an welchen die Haltemittel (50) des Kupplungselements (38) angreifen.

3. Vorrichtung nach Anspruch 1 oder 2, **dadurch gekennzeichnet, daß** das Gelenkbolzenlager (48) in Längsrichtung des Wischblatts gesehen am einen Endabschnitt des Kupplungselements (38) angeordnet ist, und daß die beiden Kupplungselementhälften (40 und 42) im Bereich des Gelenkbolzenlagers (48) durch ein Filmgelenk (44) einstückig miteinander verbunden sind.

4. Vorrichtung nach einem der Ansprüche 1 bis 3, **dadurch gekennzeichnet, daß** bezogen auf die Lage der Trennebene (66) zur Scheibe (20) die untere Hälfte (40) des Kupplungselements (38) die Längs- Außenkanten der Randstreifen (30) des Tragelements (28) mit Haltemittel bildenden Sicherungskrallen (50) umgreift.

5. Vorrichtung nach Anspruch 4, **dadurch gekennzeichnet, daß** an jedem Randstreifen (30) des Tragelements (28) zwei jeweils mit Abstand (52) voneinander angeordnete Sicherungskrallen (50) der unteren Hälfte (40) angreifen.

6. Vorrichtung nach einem der Ansprüche 1 bis 5, **dadurch gekennzeichnet, daß** bezogen auf die Lage der Trennebene (66) zur Scheibe (24) die obere Hälfte (42) des Kupplungselements (38) mit elastisch auslenkbaren Rasthaken (58) versehen ist, welche die Längs- Außenkanten der Randstreifen (30) queren und mit der unteren Bandfläche des Tragelements (28) rastend zusammen wirken.

7. Vorrichtung nach einem der Ansprüche 5 oder 6, **dadurch gekennzeichnet, daß** die Rasthaken (58) der oberen Hälfte (42) zwischen den Sicherungskrallen (50) der unteren Hälfte (40) des Kupplungselements (38) angeordnet sind.

8. Vorrichtung nach einem der Ansprüche 1 bis 7, **dadurch gekennzeichnet, daß** der Wischerarm (12) zumindest im Bereich des Gelenkbolzens (16) zwei mit Abstand voneinander und parallel zueinander, zur Scheibe (24) stehend ausgerichtete Wangen (62) aufweist, an denen jeweils ein Ende des Gelenkbolzens (16) gehalten ist und daß der Abstand zwischen den Wangen auf die Breite des Kupplungselements (38) abgestimmt ist.

9. Vorrichtung gemäß Anspruch 1 oder 2 für ein Wischblatt mit einer sich über die obere Bandfläche des Tragelements (28) hinaus erstreckenden Windabweisleiste (34), **dadurch gekennzeichnet, daß** das Kupplungselement (38) in einer Aussparung (36) in der Windabweisleiste (34) angeordnet ist und daß die obere Hälfte (42) des Kupplungselements (38) mit einem im Querschnitt dem Querschnitt der Windabweisleiste (34) zumindest angenäherten Fortsatz (60) versehen ist.

10. Vorrichtung nach einem der Ansprüche 1 bis 9, **dadurch gekennzeichnet, daß** das Kupplungselement (38) aus einem elastischen Kunststoff hergestellt ist.

11. Wischblatt für Scheiben (24) von Kraftfahrzeugen mit einer langgestreckten, gummielastischen Wischleiste (20) und einem federelastischen, bandartigen, langgestreckten Tragelement, an dem an einer unteren Seite die Wischleiste (20) und an einer oberen Bandfläche des Tragelements ein Kupplungselement (38) mit einem Gelenkbolzenlager (48) angeordnet und über Haltemittel (50) an dem Tragelement gehalten ist, wobei das Kupplungselement Mittel zum Sichern des Wischblatts für einen im Lager geführten Gelenkbolzen (16) eines Wischerarms aufweist, **dadurch gekennzeichnet, dass** das Tragelement an seinen beiden Längsseiten mit Randstreifen (30) zumindest abschnittsweise über die Längsseiten der Wischleiste (20) hinausragt und das Kupplungselement (38) über die Haltemittel (50) mit den Randstreifen (30) des Tragelements verbunden ist und dass ferner das Kupplungselement (38) in einer wenigstens annähernd zur Scheibe (24) parallel angeordneten Ebene getrennt ist, dass die Trennebene (66, 68) das Gelenkbolzenlager (48) schneidet und dass die beiden Kupplungselementhälften (40, 42) miteinander lösbar verbunden sind.

## Claims

1. Device for hingeably joining a wiper blade (10) for window panes (24) of motor vehicles to a wiper arm (12) which is guided on the motor vehicle, can be moved between reversing positions and, on its free end section, is provided with a hinge pin (16), which extends essentially in the direction of movement (18), for connection of the wiper blade, which can be placed with an elongate, elastomeric wiper strip (20), against the window pane (24), and the elongate wiper blade (10) comprises a resilient band-like, elongate supporting element, on which the wiper strip (20) is arranged on a lower side and, on the upper band surface of the supporting element that faces away from the window pane, a coupling element (38) having the hinge-pin bearing (48) is arranged and is retained on the supporting element via retaining means (50), the coupling element having means for securing the wiper blade on the hinge pin (16), which is guided in the bearing, **characterized in that** the supporting element protrudes on its two longitudinal sides at least in some sections over the longitudinal sides of the wiper strip (20) by means of edge strips (30), and the coupling element (38) is connected to the edge strips (30) of the supporting element via the retaining means (50), and **in that** furthermore coupling element (38) is separated in a plane arranged at least approximately parallel to the window pane (24), **in that** the separating plane (66, 68) intersects the hinge-pin bearing (48), and **in that** the two coupling-element halves (40, 42) are connected releaseably to each other.

2. Device according to Claim 1, **characterized in that** the supporting element includes two supporting rails (28) which are arranged in longitudinal grooves (26) of the wiper strip (20) and protrude at least over a longitudinal section out of their longitudinal grooves by means of edge strips (30) on which the retaining means (50) of the coupling element (38) act.

3. Device according to Claim 1 or 2, **characterized in that** the hinge-pin bearing (48), as seen in the longitudinal direction of the wiper blade, is arranged on an end section of the coupling element (38), and **in that** the two coupling-element halves (40 and 42) are connected integrally to each other in the region of the hinge-pin bearing (48) by a film hinge (44).

4. Device according to one of Claims 1 to 3, **characterized in that** the lower half (40) of the coupling element (38), based on the position of the separating plane (66) with respect to the window pane (20), engages around the longitudinal outer edges of the edge strips (30) of the supporting element (28) securing claws (50) which form retaining means.

5. Device according to Claim 4, **characterized in that** two securing claws (50) of the lower half (40), which claws are arranged in each case at a distance (52) from each other, act on each edge strip (30) of the supporting element (28).

6. Device according to one of Claims 1 to 5, **characterized in that** the upper half (42) of the coupling element (38), based on the position of the separating plane (66) with respect to the window pane (24), is provided with elastically deflectable latching hooks (58) which cross the longitudinal outer edges of the edge strips (30) and interact in a latching manner with the lower band surface of the supporting element (28).

7. Device according to either of Claims 5 and 6, **characterized in that** the latching hooks (58) of the upper half (42) are arranged between the securing claws (50) of the lower half (40) of the coupling element (38).

8. Device according to one of Claims 1 to 7, **characterized in that** the wiper arm (12) has, at least in the region of the hinge pin (16), two cheeks (62) which are at a distance from each other and parallel to each other, are orientated perpendicularly with respect to the window (24) and on which one end of the hinge pin (16) is held in each case, and **in that** the distance between the cheeks is coordinated with the width of the coupling element (38).

9. Device according to Claim 1 or 2 for a wiper blade having a wind-deflecting strip (34) extending beyond the upper band surface of the supporting element (28), **characterized in that** the coupling element (38) is arranged in a cutout (36) in the wind-deflecting strip (34), and **in that** the upper half (42) of the coupling element (38) is provided with an extension (60) which is at least approximate in cross section to the cross section of the wind-deflecting strip (34).

10. Device according to one of Claims 1 to 9, **characterized in that** the coupling element (38) is produced from a flexible plastic.

11. Wiper blade for window panes (24) of motor vehicles, having an elongate, elastomeric wiper strip (20) and a resilient, band-like, elongate supporting element on which the wiper strip (20) is arranged on a lower side and, on an upper band surface of the supporting element, a coupling element (38) having a hinge-pin bearing (48) is arranged and is retained on the supporting element via retaining means (50), the coupling element having means for securing the wiper blade on the hinge pin (16) of a wiper arm, which hinge pin is guided in the bearing, **characterized in that** the supporting element protrudes on its two longitudinal sides at least in some sections over the longitudinal sides of the wiper strip (20) by means of edge strips (30), and the coupling element (38) is connected to the edge strips (30) of the supporting element via the retaining means (50), and **in that** furthermore coupling element (38) is separated in a plane arranged at least approximately parallel to the window pane (24), **in that** the separating plane (66, 68) intersects the hinge-pin bearing (48), and **in that** the two coupling-element halves (40, 42) are connected releaseably to each other.

## Revendications

1. Dispositif de liaison articulée entre une raclette d'essuie-glace (10) sur des vitres (24) de véhicules automobiles et un bras d'essuie-glace (12) guidé sur le véhicule automobile, mobile entre des positions d'inversion et dont le segment terminal libre comporte un axe d'articulation (16) qui s'étend principalement dans le sens du mouvement (18) et qui sert à relier la raclette d'essuie-glace applicable sur la vitre (24) par une barrette d'essuie-glace (20) allongée en caoutchouc élastique, alors que la raclette d'essuie-glace (10) allongée comprend un élément porteur, allongé en ressort-lame élastique, dont d'une part la face inférieure porte la barrette d'essuie-glace (20) et dont d'autre part, la face supérieure détournée de la vitre porte un élément de couplage (38) muni du palier (48) de l'axe d'articulation et maintenu sur l'élément porteur par des moyens de maintien (50), l'élément de couplage présentant des moyens pour bloquer la raclette d'essuie-glace sur l'axe d'articulation (16) guidé dans le palier,
**caractérisé en ce que**
sur ses deux grands côtés comportant des bandes de bord (30) l'élément porteur dépasse, au moins par segments, des grands côtés de la barrette d'essuie-glace (20) et l'élément de couplage (38) est relié aux bandes de bord (30) de l'élément porteur par l'intermédiaire des moyens de maintien (50),
et en outre l'élément de couplage (38) est séparé dans un plan au moins approximativement parallèle à la vitre (24), de sorte que le plan de séparation (66, 68) coupe le palier d'axe d'articulation (48) et que les deux moitiés d'élément de couplage (40, 42) sont reliées l'une à l'autre de façon amovible.

2. Dispositif selon la revendication 1,
**caractérisé en ce que**
l'élément porteur comporte deux rails porteurs (28) disposés dans des rainures longitudinales (26) de la barrette d'essuie-glace (20) et qui, au moins par un segment longitudinal comportant des bandes de bord (30), dépassent de leurs rainures longitudinales dans lesquelles ont prise les moyens de maintien (50) de l'élément de couplage (38).

3. Dispositif selon la revendication 1 ou 2,
**caractérisé en ce que**
vu en direction longitudinale de la raclette d'essuie-glace, le palier (48) de l'axe d'articulation est placé contre un segment terminal de l'élément de couplage (38),
et, dans la zone du palier (48) de l'axe d'articulation, les deux moitiés (40 et 42) de l'élément de couplage sont reliées l'une à l'autre par une articulation en film (44) pour former une seule pièce.

4. Dispositif selon l'une des revendications 1 à 3,
**caractérisé en ce que**
si on se réfère à la position du plan de séparation (66) par rapport à la vitre (20), la moitié inférieure (40) de l'élément de couplage (38) entoure les arêtes extérieures longitudinales des bandes de bord (30) de l'élément porteur (28) à l'aide de griffes de blocage (50) qui forment les moyens de maintien.

5. Dispositif selon la revendication 4,
**caractérisé en ce que**
deux griffes de blocage (50) - de la moitié inférieure (40) - disposées à distance (52) l'une de l'autre s'appliquent sur chaque bande de bord (30) de l'élément porteur (28).

6. Dispositif selon l'une des revendications 1 à 5,
**caractérisé en ce que**
si on se réfère à la position du plan de séparation (66) par rapport à la vitre (20), la moitié supérieure (42) de l'élément de couplage (38) est munie de crochets d'arrêt (58) qui peuvent se déployer élastiquement et qui croisent les arêtes extérieures longitudinales des bandes de bord (30) et interagissent par accrochage avec la face inférieure de l'élément porteur (28).

7. Dispositif selon l'une des revendications 5 ou 6,
**caractérisé en ce que**
les crochets d'arrêt (58) de la moitié supérieure (42) sont disposés entre les griffes de blocage (50) de la moitié inférieure (40) de l'élément de couplage (38).

8. Dispositif selon l'une des revendications 1 à 7,
**caractérisé en ce que**
au moins dans la zone de l'axe d'articulation (16), le bras d'essuie-glace (12) présente deux joues (62) perpendiculaires à la vitre (24) et écartées parallèlement l'une de l'autre, et sur chacune desquelles est maintenue une extrémité de l'axe d'articulation (16), et
la distance entre les joues est fonction de la largeur de l'élément de couplage (38).

9. Dispositif selon la revendication 1 ou 2 pour une raclette d'essuie-glace comportant un déflecteur de vent (34) qui s'étend au-delà de la surface supérieure en ruban de l'élément porteur (28),
**caractérisé en ce que**
l'élément de couplage (38) est disposé dans un évidement (36) situé dans le déflecteur de vent (34) et
la moitié supérieure (42) de l'élément de couplage (38) est munie d'un prolongement (60) qui en section transversale se rapproche au moins de la section transversale du déflecteur de vent (34).

10. Dispositif selon l'une des revendications 1 à 9,
**caractérisé en ce que**
l'élément de couplage (38) est en matière synthétique élastique.

11. Raclette d'essuie-glace pour des vitres (24) de véhicules automobiles comportant une barrette d'essuie-glace (20) allongée en caoutchouc élastique et un élément porteur, allongé en ruban ressort élastique, dont d'une part une face inférieure porte la barrette d'essuie-glace (20) et dont d'autre part, une face supérieure porte un élément de couplage (38) muni du palier (48) de l'axe d'articulation et maintenu sur l'élément porteur par des moyens de maintien (50),
l'élément de couplage présentant des moyens pour bloquer la raclette d'essuie-glace sur l'axe d'articulation (16) guidé dans le palier,
**caractérisée en ce que**
sur ses deux grands côtés comportant des bandes de bord (30) l'élément porteur dépasse, au moins par segments, des grands côtés de la barrette d'essuie-glace (20) et l'élément de couplage (38) est relié aux bandes de bord (30) de l'élément porteur par l'intermédiaire des moyens de maintien (50),
et en outre l'élément de couplage (38) est séparé dans un plan au moins approximativement parallèle à la vitre (24), de sorte que le plan de séparation (66, 68) coupe le palier d'axe d'articulation (48) et que les deux moitiés d'élément de couplage (40, 42) sont reliées l'une à l'autre de façon amovible.
